# EUROPÄISCHE PATENTSCHRIFT

(11) **EP 2 268 511 B1**
(45) Veröffentlichungstag und Bekanntmachung des Hinweises auf die Patenterteilung: **12.08.2015**
(21) Anmeldenummer: 08735272.0
(22) Anmeldetag: 16.04.2008
(51) Int. Cl.: B60R 25/20, G07C 9/00

(54) **VORRICHTUNG ZUM BETÄTIGEN VON SCHLÖSSERN, INSBESONDERE AN FAHRZEUGEN**
DEVICE FOR ACTUATING LOCKS, PARTICULARLY ON VEHICLES
DISPOSITIF POUR ACTIONNER DES SERRURES, NOTAMMENT SUR DES VÉHICULES

(43) Veröffentlichungstag der Anmeldung: 05.01.2011
(73) Patentinhaber: Huf Hülsbeck & Fürst GmbH & Co. KG, 42551 Velbert (DE)
(72) Erfinder: GELDMACHER, Alexander, 42113 Wuppertal (DE)
(74) Vertreter: Buse, Mentzel, Ludewig Patentanwaltskanzlei
(86) Internationale Anmeldenummer: PCT/EP2008/003026
(87) Internationale Veröffentlichungsnummer: WO 2009/127227

(56) Entgegenhaltungen:
- WO-A-2008/040269
- WO-A1-2008/006551
- DE-U1-202005 004 994
- US-A- 6 050 118
- US-A1- 2004 237 613
- US-A1- 2006 010 944
- US-B1- 6 553 802

## Beschreibung

Die Erfindung betrifft eine Vorrichtung der im Oberbegriff des Anspruches 1 angegebenen Art. Solche Vorrichtungen werden normalerweise von einer Bedienperson mitgeführt, um beispielsweise den Zugang zu einem Fahrzeug zu ermöglichen bzw. um das Fahrzeug nach der Benutzung wieder zu verriegeln. Darüber hinaus kann die Vorrichtung auch weitere Funktionen aufweisen, wie beispielsweise das Öffnen der Heckklappe, die Betätigung der Fensterheber oder das Ein- bzw. Ausschalten von Licht, Alarmanlage, Klimaanlage und Ähnlichem.

Die meisten Vorrichtungen dieser Art sind mit einer Anringöse versehen, womit diese an einem Schlüsselbund oder Ähnlichem befestigt werden können. Viele Bedienpersonen führen jedoch die Vorrichtung einzeln mit sich, ohne sie an einem Schlüsselbund zu befestigen. Ist dann trotzdem eine Anringöse vorgesehen, so wird diese von der Bedienperson häufig als störend empfunden. Außerdem kann die Anringöse, insbesondere wenn die Vorrichtung in einer Jacken- oder Hosentasche transportiert wird, das Innenfutter der Tasche beschädigen, so dass es schlimmstenfalls sogar dazu kommen kann, dass die Bedienperson die Vorrichtung verliert.

Außerdem ist es möglich, dass es vorgesehen ist, in der Vorrichtung gewisse Daten, beispielsweise des Fahrzeuges zu speichern, wie Kilometerstand, Zeitpunkt der nächsten Inspektion, durchschnittlicher Verbrauch, Füllstand des Tanks usw.. Um diese Daten auszulesen muss die Vorrichtung entweder mit einem Sender versehen sein, welcher die Daten drahtlos an ein elektronisches Gerät übertragen kann, oder eine elektronische Schnittstelle aufweisen, welche zur Datenübertragung dient. Eine solche elektronische Schnittstelle muss jedoch von außen zugänglich sein, um hierdurch die Verbindung zum elektronischen Gerät herzustellen.

Es ist jedoch insgesamt wünschenswert, dass die Vorrichtung nicht zu groß ist und einen guten optischen Gesamteindruck beim Benutzer erzeugt.

Das Dokument WO 2008/006551 A1 offenbart bereits eine Vorrichtung zum Betätigen von Schlössern an Fahrzeugen. Die Vorrichtung verfügt über elektronische und/oder mechanische Bauteile und ist zur Identifizierung bzw. zur Abfrage der Berechtigung eines Benutzers geeignet. Die Vorrichtung weist dabei eine Aufnahme auf, in der mehrere lösbare Elemente angeordnet werden können. Als lösbare Elemente schlägt das Dokument eine Anringöse, welche aus ein oder zwei Teilen besteht, einen Steg der zur Aufnahme eines Bandes oder Ähnliches dienen kann, einen Blinstopfen, eine elektronische Anschlussstelle, wie beispielsweise ein USB-Anschluss, ein Navigations- und Positionierungsmodul oder Ähnliches vor. Diese verschiedenen Elemente können auf einfache Art von der Vorrichtung entfernt oder an dieser angebracht werden. Es besteht jedoch die Gefahr, dass eine Bedienperson die betreffenden Elemente versehentlich entfernt. Das Dokument beschreibt auch einen mechanischen Notschlüssel, der durch die Betätigung eines Knopfes ausgeschwenkt werden kann, um eine Tür eines Fahrzeuges mechanisch zu öffnen. Ein Entfernen des Notschlüssels vom eigentlichen Schlüsselkörper ist hier nicht vorgesehen.

Aufgabe der Erfindung ist es daher, eine Vorrichtung der im Oberbegriff des Anspruches 1 angegebenen Art zu schaffen, welche je nach Bedarf für alle oben genannten Anwendungsfälle einsetzbar ist und welche trotzdem eine gute Handhabbarkeit aufweist und einen vorteilhaften optischen Gesamteindruck bietet. Diese Aufgabe wird durch die kennzeichnenden Merkmale des Anspruches 1 gelöst, denen folgende besondere Bedeutung zukommt.

Die Vorrichtung weist eine Aufnahme auf, in welche ein lösbares Element anordnenbar ist, wobei dieses Element an der Vorrichtung festlegbar ist. Der besondere Vorteil der Erfindung liegt darin, dass je nach Bedarfs- und Anwendungsfall verschiedene lösbare Elemente in die Aufnahme der Vorrichtung eingebracht werden können. Ebenfalls lassen sich diese Elemente einfach und schnell auswechseln, falls andere Anforderungen gestellt werden.

Weitere Ausführungsformen und Vorteile der Erfindung ergeben sich aus der nachfolgenden Beschreibung, den Unteransprüchen sowie den Zeichnungen. In den Zeichnungen ist die Erfindung in vier Ausführungsbeispielen dargestellt. Es zeigen:
- Fig. 1: einen Teil einer erfindungsgemäßen Vorrichtung im Schnitt mit einem ersten lösbaren Element im eingebauten Zustand,
- Fig. 2: die Vorrichtung gemäß Fig. 1 in perspektivischer Darstellung mit entnommenem Notschlüssel,
- Fig. 3: eine Vergrößerung gemäß III in Fig. 2,
- Fig. 4: den Ausschnitt gemäß II in Fig. 3, jedoch mit entnommenem lösbarem Element,
- Fig. 5: das lösbare Element aus Fig. 1 bis 3,
- Fig. 6: eine zweite Ausführungsform des lösbaren Elements mit Anringöse,
- Fig. 7: eine dritte Ausführungsform eines lösbaren Elements als Blindstopfen,
- Fig. 8: eine vierte Ausführungsform eines lösbaren Elementes mit elektronischem Kontakt.
- Fig. 9: eine fünfte Ausführungsform eines lösbaren Elementes mit Anringöse
- Fig. 10: eine sechste Ausführungsform eines lösbaren Elementes
- Fig. 11: die Ausführungsform des lösbaren Elementes aus Fig. 10 in Seitenansicht
- Fig. 12: das lösbare Element aus Fig. 9 im befestigten Zustand
- Fig. 13: die Vorrichtung aus Fig. 12 in Draufsicht bei entferntem mechanischem Notschlüssel

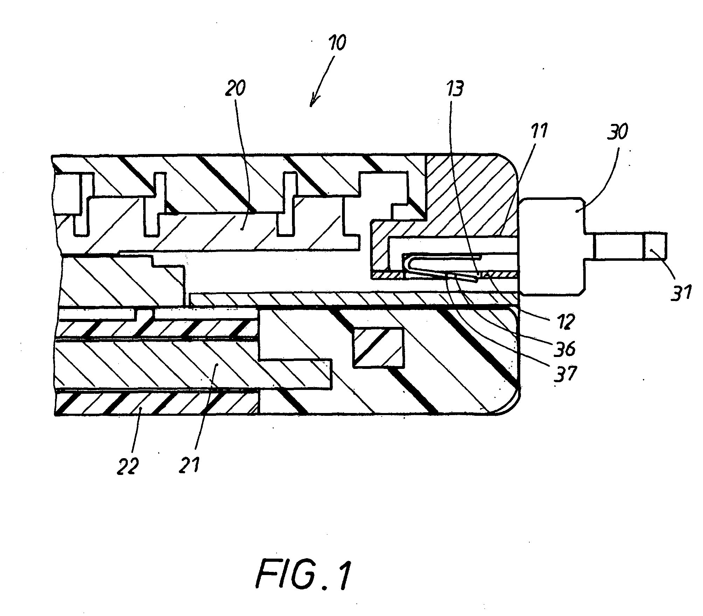

In Fig. 1 ist ein Teil einer ersten erfindungsgemäßen Vorrichtung 10 im Schnitt dargestellt. Die Vorrichtung 10 weist eine Aufnahme 11 auf, in welcher ein lösbares Element 30 angeordnet ist. Dieses lösbare Element 30 weist eine Anringöse 31 auf. Eine solche kann dazu verwendet werden, die Vorrichtung 10 an einem Schlüsselbund, Schlüsselanhänger oder Ähnlichem zu befestigen. Das lösbare Element 30 weist ein Rastmittel 36 auf, welches hier als Federzunge 37 ausgeführt ist. Die Vorrichtung 10 weist hierzu ein Gegenrastmittel 12 auf, welches die Form einer Rastöffnung 13 besitzt. Im hier dargestellten eingebauten Zustand ist das Rastmittel 36 mit dem Gegenrastmittel 12 verrastet, wodurch das lösbare Element 30 sicher in der Aufnahme 11 der Vorrichtung 10 festgelegt ist.

Weiterhin weist die Vorrichtung 10 weitere Bauteile 20 auf. Auch ist ein mechanischer Notschlüssel 21 vorhanden, welcher von dem Rest der Vorrichtung 10 trennbar ist. Dieser mechanische Notschlüssel 21 dient der Notbetätigung eines Schlosses am Fahrzeug für den Fall, dass eine elektronische Betätigung, beispielsweise mittels Annäherung des Benutzers an das Fahrzeug oder mittels Betätigung eines Auslöseknopfes an der Vorrichtung 10 versagt. Der mechanische Notschlüssel 21 wird hier durch den Batteriefachdeckel 22 geführt, was eine Platzersparnis mit sich bringt und so eine kompakte Bauweise der Vorrichtung 10 ermöglicht. Selbstverständlich ist es auch möglich, den Notschlüssel 21 so zu gestalten, dass er aus der Vorrichtung 10 herausklapp- oder -schwenkbar ist, aber immer noch mit dieser verbunden bleibt.

Der mechanische Notschlüssel 21 ist hier so angeordnet, dass das Rastmittel 36 des lösbaren Elementes 30 nur zugänglich ist, wenn der mechanische Notschlüssel 21 aus der Vorrichtung 10 entfernt wurde. Dadurch ist die Rastverbindung 13, 37 zusätzlich geschützt und das lösbare Element 30 noch sicherer gelagert.

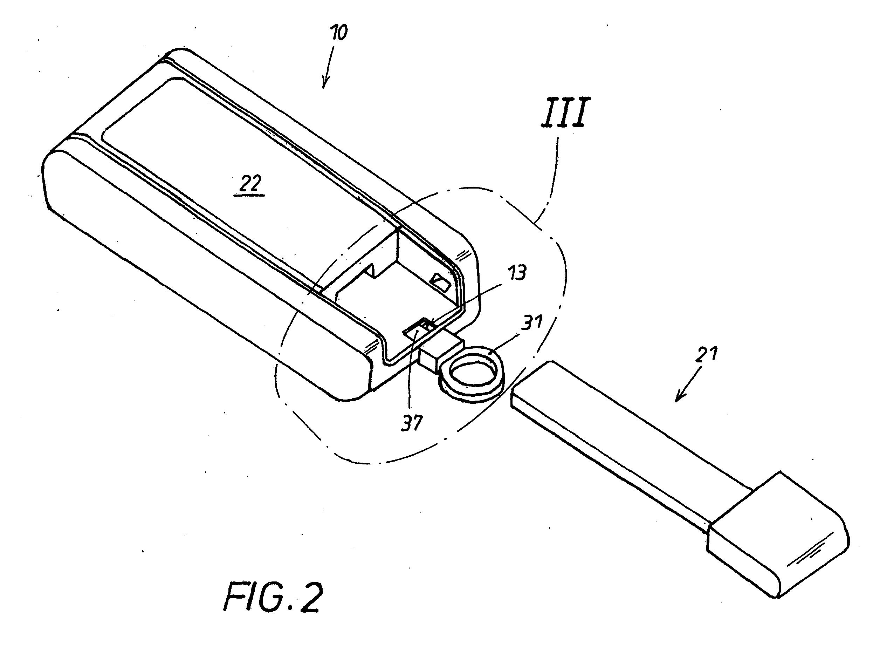

Dies wird auch aus Fig. 2 näher ersichtlich. Hier ist der mechanische Notschlüssel 21 aus der Vorrichtung 10 entnommen und die Rastverbindung 13, 37 ist zugänglich. Auch der Batteriefachdeckel 22 ist hier zu erkennen. Wird dieser geöffnet, so ist die in der Vorrichtung 10 enthaltene Batterie zugänglich, beispielsweise um sie auszutauschen.

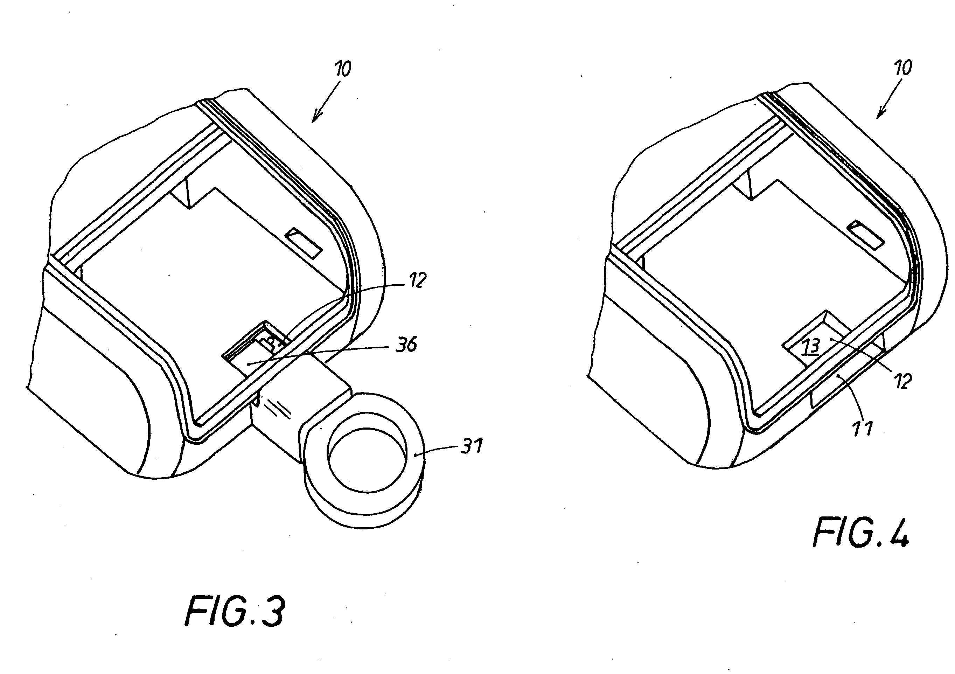

Die Fig. 3 zeigt nochmals in Vergrößerung die Rastverbindung 12, 36. Das Rastmittel 36 ist in das Gegenrastmittel 12 eingerastet. Da der Notschlüssel 21 entnommen ist, ist es möglich, das lösbare Element 30, welches hier über eine Anringöse 31 verfügt, zu entfernen. Um die Rastverbindung 12, 36 zu lösen, wird auf das Rastmittel 36 von oben ein Druck ausgeübt. Das hier als Federzunge 37 ausgebildete Rastmittel 36 kommt dann außer Eingriff mit der Rastöffnung 13, die das Gegenrastmittel 12 bildet. Das lösbare Element 30 kann so herausgezogen werden, wodurch der in Fig. 4 näher dargestellte Zustand entsteht. Hier ist auch die Aufnahme 11 ersichtlich, in welche nun wieder ein beliebiges lösbares Element 30 eingeführt werden kann.

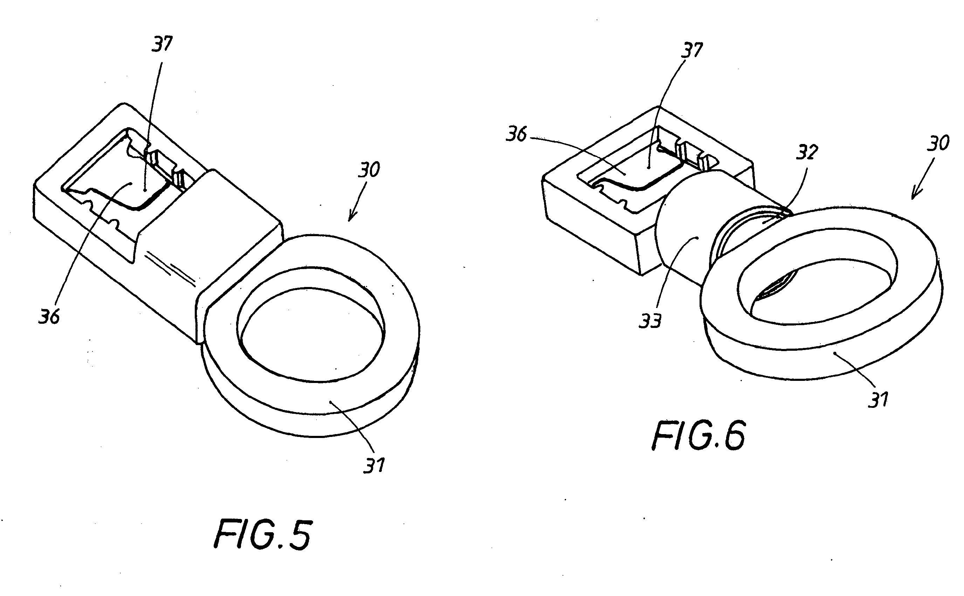

Die Fig. 5 bis 8 zeigen verschiedene Ausführungsformen von lösbaren Elementen 30. Fig. 5 zeigt hierbei das bereits bekannte lösbare Element 30 mit Anringöse 31. Auch das als Federzunge 37 ausgebildete Rastmittel 36 ist näher ersichtlich.

Eine andere Ausführungsform eines lösbaren Elementes 30 mit Anringöse 31 ist in Fig. 6 dargestellt. Hierbei ist die Anringöse 31 zweiteilig 32, 33 ausgeführt. Das Element 32 ist drehfest mit der Anringöse 31 selbst verbunden, während das Element 33 mit dem Teil des lösbaren Elementes 30 verbunden ist, der das Rastmittel 36 trägt. Diese Ausführungsform hat den Vorteil, dass im Einbauzustand die Anringöse 31 gegenüber der Vorrichtung 10 drehbar ist, was insbesondere dann von Vorteil ist, wenn die Vorrichtung 10 an einem Schlüsselbund mit mehreren Schlüsseln, Schlüsselanhängern oder Ähnlichem befestigt ist.

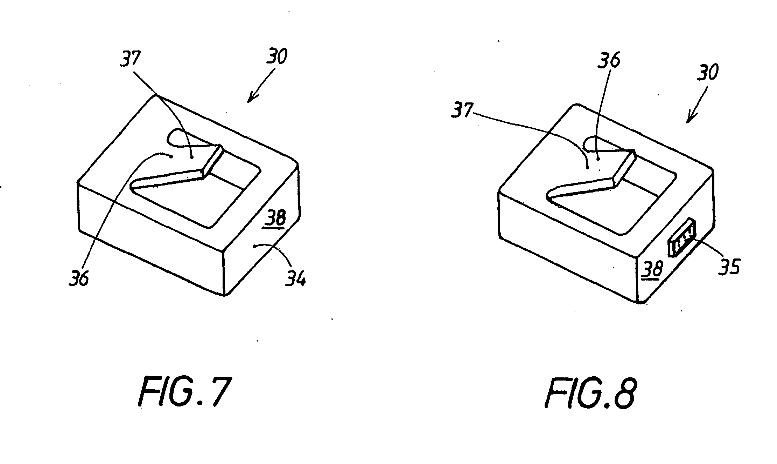

Fig. 7 zeigt ein lösbares Element 30, welches als Blindstopfen 34 ausgebildet ist. Der Blindstopfen weist wiederum das Rastmittel 36, hier als Federzunge 37, auf. Die Außenseite 38 des Blindstopfens 34 ist so gestaltet, dass im Einbauzustand ein optisch einheitlicher Gesamteindruck mit der Vorrichtung 10 entsteht. Die Montage eines Blindstopfens 34 ist vor allem dann sinnvoll, wenn die Bedienperson die Vorrichtung 10 nicht an einem Schlüsselbund befestigen möchte, sondern sie vielmehr einzeln, beispielsweise in einer Hosen- oder Jackentasche mit sich führt. Die Vorrichtung 10 ist dann besser handhabbar, da sie keine störenden Vorsprünge, beispielsweise durch eine Anringöse 31 aufweist. Außerdem wird das Innenfutter der entsprechenden Taschen nicht beschädigt und es entsteht ein vorteilhafter, optischer Eindruck der Vorrichtung 10.

Ein weiteres Ausführungsbeispiel ist in Fig. 8 dargestellt. Das lösbare Element 30 besitzt an seiner Außenseite 38 einen elektronischen Kontakt 35. Die hier nicht dargestellte Vorrichtung 10 besitzt im Bereich der Aufnahme 11 elektronische Anschlussstellen, wobei das lösbare Element 30 hier ebenfalls nicht näher gezeigte Gegenanschlussstellen aufweist. Im Einbauzustand wird zwischen den elektronischen Anschlussstellen und Gegenanschlussstellen eine elektrische Verbindung hergestellt. Wird nun ein elektronisches Gerät am elektronischen Kontakt 35 angeschlossen, so können über diesen sowie die elektrische Verbindung zwischen den Anschlussstellen und den Gegenanschlussstellen Daten in die Vorrichtung 10 ein- bzw. aus der Vorrichtung 10 ausgelesen werden. Besonders günstig ist es, hierbei den elektronischen Kontakt 35 als USB-Anschluss (Universal-Serial-Bus) auszuführen, da es sich hierbei um ein weit verbreitetes Bus-System handelt, wodurch eine Kommunikation mit vielen verschiedenen elektronischen Geräten ermöglicht wird. Auch ist es möglich, über den elektronischen Kontakt 35 eine in der Vorrichtung 10 zur Stromversorgung vorgesehene Batterie mit Strom zu versorgen.

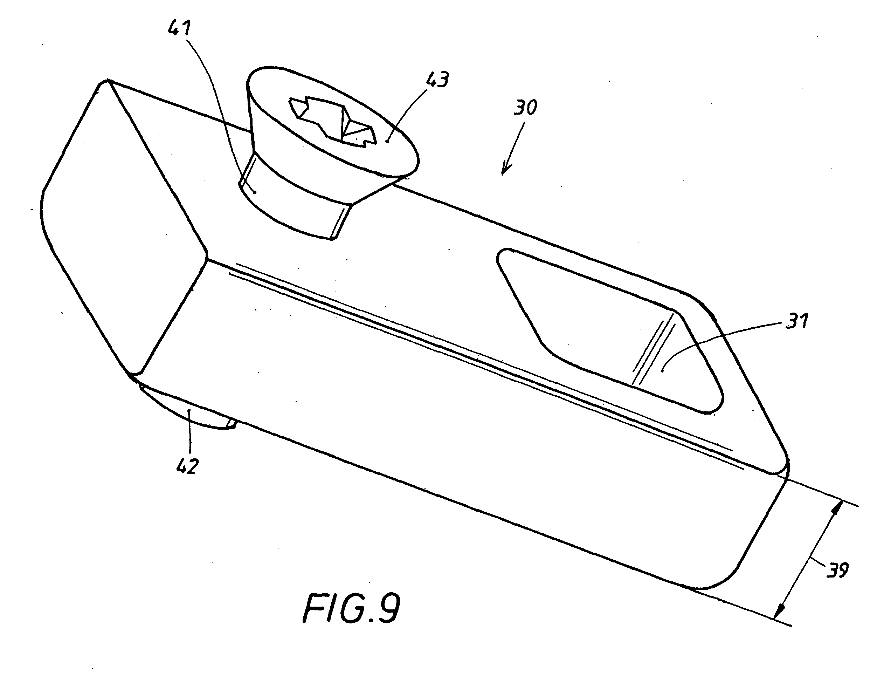

Eine weitere Möglichkeit der lösbaren Befestigung wird durch das in Fig. 9 dargestellte lösbare Element 30 gezeigt. Das lösbare Element 30 ist hier als Anringöse 31 ausgeführt. In dem lösbaren Element 30 ist eine Schraube 41 angeordnet, deren Schraubenkopf 43 auf der einen Seite des lösbaren Elementes 30 und deren Schraubenende 42 auf der anderen Seite des lösbaren Elementes 30 heraussteht. Diese Schraube 41 dient der lösbaren Befestigung des Elementes 30 an der Vorrichtung 10. Außerdem ist die lichte Breite 39 des lösbaren Elementes 30 zu erkennen.

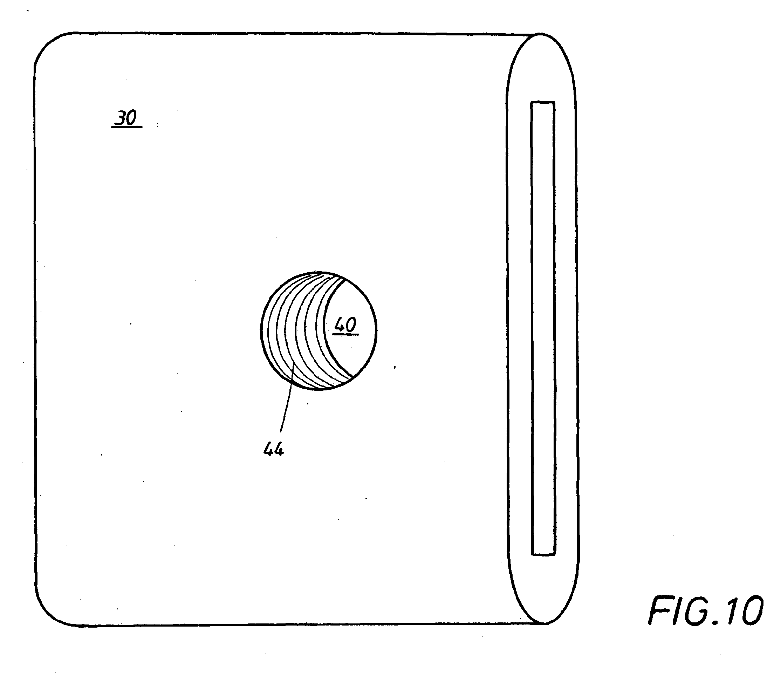

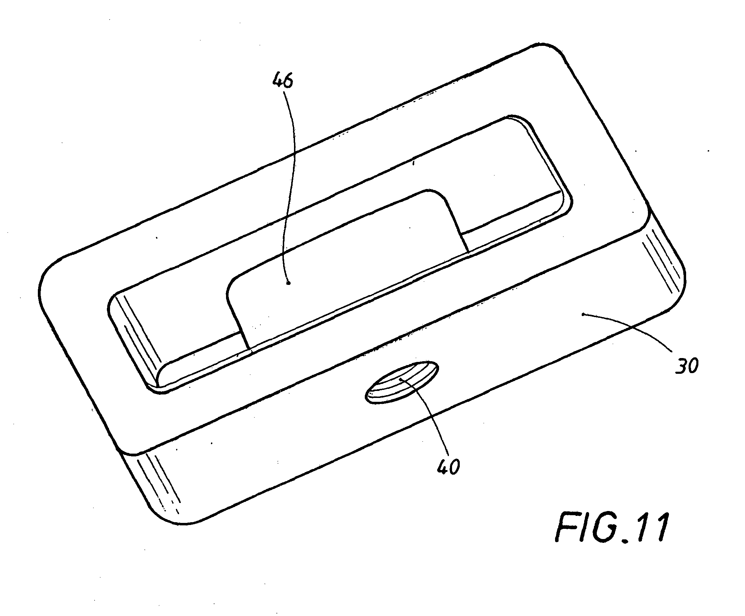

Eine weitere Möglichkeit eines lösbaren Elementes 30 zeigen die Figuren 10 und 11. Das dort gezeigte lösbare Element 30 weist einen Steg 46 auf, welcher beispielsweise zur Befestigung eines Bandes dienen kann. Mittels dieses Bandes ist die Vorrichtung 10 dann in verschiedener Weise zu haltern. Die Schraubenöffnung 40 die zur Aufnahme der Schraube 41 dient, verläuft im Inneren des Steges 46. Hier ist auch das Gewinde 44 vorgesehen, mittels welchem die Schraube 41 im lösbaren Element 30 zu haltern ist.

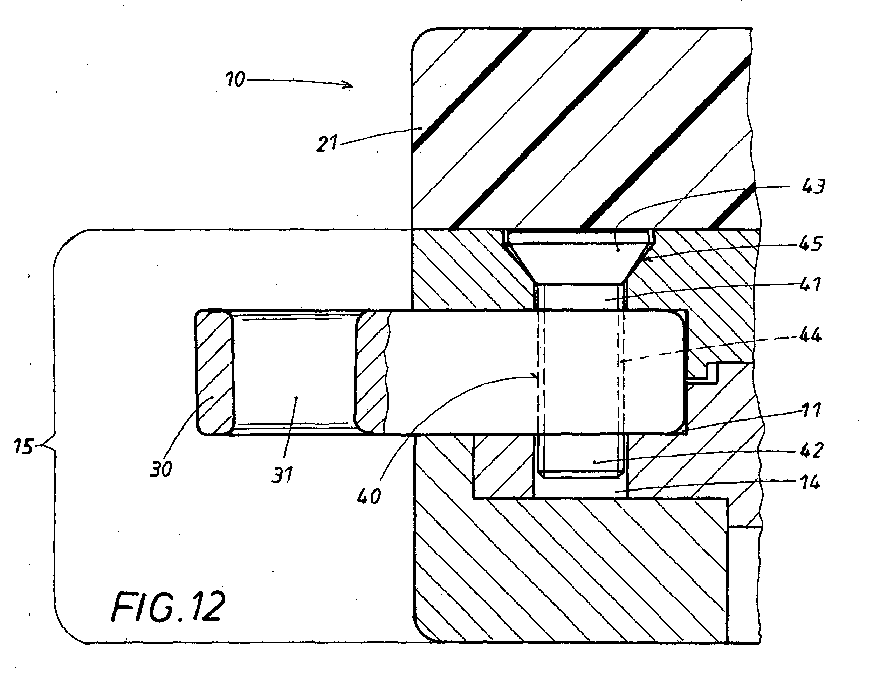

Die Details der lösbaren Befestigung des Elementes 30 in der Vorrichtung 10 zeigt Fig. 12. Das wiederum als Anringöse 31 gestaltete Element 30 weist die Schrauböffnung 40 auf, welche über ein Gewinde 44 verfügt. Die Schraube 41 ist in diese Schraubenöffnung 40 eingebracht und ragt mit dem Schraubenende 42 auf der einen und mit dem Schraubenkopf 43 auf der anderen Seite des lösbaren Elementes 30 heraus. Die Vorrichtung 10 weist eine Ausnehmung 14 auf, welche zur Aufnahme des Schraubenendes 42 dient. Die Ausnehmung 14 ist hier nicht mehr mit einem Gewinde 44 versehen, jedoch wird das lösbare Element 30 durch eine formschlüssige Verbindung auf Grund der Aufnahme des Schraubenendes 42 in die Ausnehmung 14 gehalten. Der Schraubenkopf 43 liegt in der Vertiefung 45 der Vorrichtung 10 an. Die Schraube 41 ist hier als Senkkopfschraube ausgeführt. Es ist jedoch auch möglich, andere Bauformen vorzusehen. Die Vertiefung 45 ist so ausgeführt, dass der Schraubenkopf 43 bei angebrachtem lösbarem Element 30 innerhalb der lichten Breite 15 der Vorrichtung 10 angeordnet ist. Somit ist eine einfache und fehlerfreie Montage und Demontage des Notschlüssels 21 möglich.

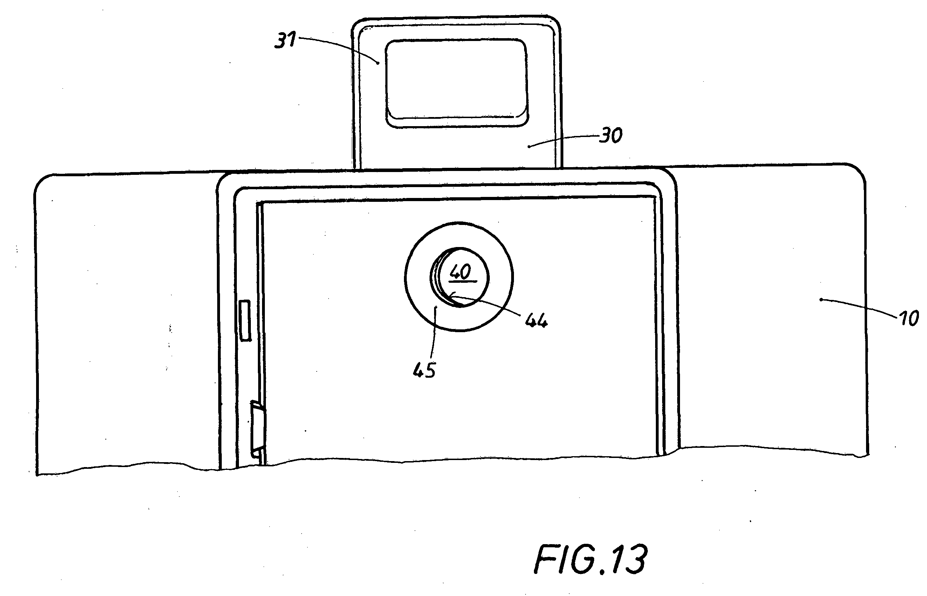

Fig. 13 wiederum zeigt nochmals die Vorrichtung 10 aus Fig. 12, jedoch mit entferntem Notschlüssel 21 und ohne Schraube 41. Man erkennt hier die Vertiefung 45, die zur Aufnahme des Schraubenkopfes 43 dienen kann. Auch ist die Schraubenöffnung 40 erkennbar. Durch Einführen der Schraube 41 in die Schraubenöffnung 40 kann nun das lösbare Element 30 mit der Vorrichtung 10 sicher verbunden werden. Es wäre jedoch jetzt auch möglich, die vorhandene Anringöse 31 zu entfernen und durch ein anderes lösbares Element 30 zu ersetzen, welches dann wiederum lediglich durch eine Schraube 41 in der Schraubenöffnung 40 gehaltert werden kann.

Abschließend sei noch darauf hingewiesen, dass die hier dargestellten Ausführungsformen lediglich beispielsweise Darstellungen der Erfindung sind. Es sind noch vielerlei Abwandlungen und Abänderungen möglich. Beispielsweise können noch verschiedene andere lösbare Elemente mit unterschiedlichen Eigenschaften vorgesehen sein. Auch die Verbindung zwischen dem lösbaren Element und der Vorrichtung kann anders ausgeführt werden. Es wäre beispielsweise auch denkbar, das lösbare Element am mechanischen Notschlüssel zu befestigen und zusammen mit diesem in die Vorrichtung einzuführen und dort festzulegen.

### Bezugszeichenliste:

- 10: Vorrichtung
- 11: Aufnahme
- 12: Gegenrastmittel
- 13: Rastöffnung
- 14: Ausnehmung
- 15: Lichte Breite von 10
- 20: Bauteile
- 21: Mechanischer Notschlüssel
- 22: Batteriefachdeckel
- 30: Lösbares Element
- 31: Anringöse
- 32: Erster Teil von 31
- 33: Zweiter Teil von 31
- 34: Blindstopfen
- 35: Elektronischer Kontakt
- 36: Rastmittel
- 37: Federzunge
- 38: Außenseite von 30
- 39: Lichte Breite von 30
- 40: Schraubenöffnung
- 41: Schraube
- 42: Schraubenende
- 43: Schraubenkopf
- 44: Gewinde
- 45: Vertiefung
- 46: Steg

## Patentansprüche

1. Vorrichtung (10) zum Betätigen von Schlössern insbesondere an Fahrzeugen,
welche über elektronische und / oder mechanische Bauteile (20) verfügt, wobei diese Bauteile (20) zur Identifizierung des Benutzers dienen und im positiven Identifizierungsfall eines oder mehrere Schlösser am Fahrzeug betätigbar sind,
wobei die Vorrichtung (10) eine Aufnahme (11) aufweist, in welcher zumindest ein lösbares Element (30), welches nicht zur Identifizierung des Benutzers dient, anordnenbar ist,
wobei das lösbare Element (30) an der Vorrichtung (10) festlegbar ist, wobei eine Mehrzahl von lösbaren Elementen (30) vorgesehen ist, welche verschiedene Eigenschaften aufweisen und an der gleichen Aufnahme (11) anordnenbar und festlegbar sind,
wobei die verschiedenen lösbaren Elemente (30) nach Bedarf auswechselbar sind,
wobei die lösbaren Elemente (30) über ein oder mehrere Rastmittel (36) verfügen und die Vorrichtung (10) über ein oder mehrere Gegenrastmittel (12) verfügt
und wobei im eingebauten Zustand die Rastmittel (36) mit den Gegenrastmitteln (12) eine Verrastung des jeweiligen lösbaren Elementes (30) in der Vorrichtung (10) bewirken
**dadurch gekennzeichnet,**
**dass** die Vorrichtung (10) zusätzlich zu den lösbaren Elementen (30) einen mechanischen Notschlüssel (21) aufweist, welcher von der restlichen Vorrichtung (10) trennbar ist
und **dass** ein Lösen der lösbaren Elemente (30) nur erfolgen kann, wenn der Notschlüssel (21) aus der Vorrichtung (10) entnommen ist.

2. Vorrichtung nach Anspruch 1, **dadurch gekennzeichnet**, die Vorrichtung (10) ein Batteriefach mit einem Deckel (Batteriefachdeckel 22) aufweist und dass der Notschlüssel (21) im eingebauten Zustand durch den Batteriefachdeckel (22) geführt wird.

3. Vorrichtung nach einem der Ansprüche 1 oder 2, **dadurch gekennzeichnet, dass** als Rastmittel (36) eine Federzunge (37) und/oder als Gegenrastmittel (12) eine Rastöffnung (13) vorgesehen ist

4. Vorrichtung nach einem der Ansprüche 1 bis 3, **dadurch gekennzeichnet, dass** zumindest eines der lösbaren Element (30) eine Anringöse (31) aufweist, welche insbesondere aus zwei Teilen (32, 33) besteht, welche gegeneinander drehbar gelagert sind.

5. Vorrichtung nach einem der Ansprüche 1 bis 3, **dadurch gekennzeichnet, dass** wenigstens eines der lösbaren Elemente (31) einen Steg (46) aufweist, der zur Aufnahme eines Bandes dienen kann.

6. Vorrichtung nach einem der Ansprüche 1 bis 3, **dadurch gekennzeichnet, dass** eines der lösbaren Elemente (31) ein Blindstopfen (34) ist.

7. Vorrichtung nach Anspruch 6, **dadurch gekennzeichnet, dass** der Blindstopfen (34) und insbesondere seine Außenseite (38) nach Form und Farbe der Vorrichtung (10) angepasst ist und mit diesem einen einheitlichen optischen Gesamteindruck bildet.

## Claims

1. A device (10) for actuating locks, in particular on vehicles,
that have electronic and / or mechanical components (20),
whereby, these components (20) are used to identify the user and, in the event of a positive case of identification, one or more of the locks on the vehicle can be activated,
whereby, the device (10) features a receptacle (11) in which a minimum of one removable element (30), which is not used to identify the user, can be arranged,
whereby, the detachable element (30) can be fixed on the device (10),
whereby, multiple detachable elements (30) are provided that feature different characteristics and can be arranged and fixed on the same receptacle (11),
whereby, the different detachable elements (30) can be replaced as necessary,
whereby, the detachable elements (30) have one or more catching devices (36) and the device (10) has one or more counter-catches (12)
and, whereby, in the installed condition, the catching device (36) with the counter-catches (12) has the effect of latching of the respective detachable elements (30) in the device (10)
**characterized in that**,
the device (10), in addition to the detachable elements (30), also features a mechanical emergency key (21), that can be separated from the rest of the device (10)
and that releasing of the detachable elements (30) can only be carried out when the emergency key (21) is removed from the device (10).

2. A device in accordance with claim 1, **characterized in that** the device (10) features a battery compartment with a cover (battery compartment cover 22).
and that, in the installed condition, the emergency key (21) is guided through the battery compartment cover (22).

3. A device in accordance with one of the claims 1 or 2, **characterized in that** a flexible tongue (37) is provided as a catching device (36) and/or, as a counter-catch device (12), a catch opening (13).

4. A device in accordance with one of the claims 1 to 3, **characterized in that** a minimum of one of the detachable elements (30) features a ring eyelet (31) which, in particular, consists of two parts (32, 33), that are mounted so that they can be rotated opposite to each other.

5. A device in accordance with one of the claims 1 to 3, **characterized in that** a minimum of one of the detachable elements (31) features a web (46) that can be used to accept a tape.

6. A device in accordance with one of the claims 1 to 3, **characterized in that** one of the detachable elements (31) is a blanking plug (34).

7. A device in accordance with the claim 6, **characterized in that** the blanking plug (34) and in particular its outer side (38), is adapted to the device (10) in shape and colour and forms an overall uniform, optical impression with this.

## Revendications

1. Dispositif (10) pour actionner des serrures, notamment sur des véhicules,
qui est doté de composants électroniques et/ou mécaniques (20),
sachant que ces composants (20) servent à identifier l'utilisateur et qu'ils sont actionnables en cas d'identification positive d'une ou plusieurs serrures du véhicule,
sachant que le dispositif (10) présente un réceptacle (11) dans lequel peut être agencé au moins un élément détachable (30) qui ne sert pas à identifier l'utilisateur,
sachant que l'élément détachable (30) peut être fixé contre le dispositif (10),
sachant qu'est prévu un nombre supplémentaire d'éléments détachables (30) présentant des propriétés différentes et qu'il est possible d'agencer et de fixer contre le même réceptacle (11),
sachant que les différents éléments (30) détachables sont interchangeables suivant besoin,
sachant que les éléments détachables (30) disposent d'un ou de plusieurs moyens de crantage (36) et que le dispositif (10) dispose d'un ou plusieurs moyens de crantage antagonistes (12)
et sachant qu'à l'état incorporé, les moyens de crantage (36) provoquent, avec les moyens de crantage antagonistes (12), un crantage de l'élément détachable respectif (30) dans le dispositif (10),
**caractérisé en ce que**
le dispositif (10) présente, en plus des éléments détachables (30), une clé mécanique d'urgence (21) qu'il est possible de détacher du reste du dispositif (10)
et **en ce qu'**un détachement des éléments détachables (30) ne peut avoir lieu que si la clé d'urgence (21) est prélevée du dispositif (10).

2. Dispositif selon la revendication 1, **caractérisé en ce que** le dispositif (10) présente un compartiment à batterie avec couvercle (couvercle (22) de compartiment à batterie)
et **en ce que** la clé d'urgence (21) est guidée, à l'état incorporé, par le le couvercle (22) du compartiment à batterie.

3. Dispositif selon l'une des revendications 1 ou 2, **caractérisé en ce que** comme moyen de crantage (36) est prévue une languette ressort (37) et/ou, comme moyen de crantage antagoniste (12), un orifice de crantage (13).

4. Dispositif selon l'une des revendications 1 à 3, **caractérisé en ce qu'**au moins l'un des éléments (30) détachables présente un sillet annulaire (31) rapporté composé notamment de deux parties (32, 33) en appui rotatif l'une contre l'autre.

5. Dispositif selon l'une des revendications 1 à 3, **caractérisé en ce qu'**au moins l'un des éléments détachables (31) présente une nervure (46) pouvant servir à recevoir une bande.

6. Dispositif selon l'une des revendications 1 à 3, **caractérisé en ce que** l'un des éléments détachables (31) est un bouchon borgne (34).

7. Dispositif selon la revendication 6, **caractérisé en ce que** le bouchon borgne (34) et en particulier son côté extérieur (38) est adapté à la forme et à la couleur du dispositif (10) et qu'il crée avec ce dernier une impression visuelle uniforme.
